# EUROPEAN PATENT SPECIFICATION

(11) **EP 3 193 510 B1**
(45) Date of publication and mention of the grant of the patent: **04.11.2020**
(21) Application number: 15839845.3
(22) Date of filing: 27.01.2015
(51) Int. Cl.: H04Q 9/00, F24F 11/32, F24F 11/65, F24F 11/54, F24F 11/61, F24F 11/50, F24F 11/89

(54) **CONTROL DEVICE, SYSTEM AND CONTROL METHOD THEREFOR**
STEUERUNGSVORRICHTUNG, SYSTEM UND STEUERUNGSVERFAHREN DAFÜR
DISPOSITIF DE COMMANDE, SYSTÈME ET PROCÉDÉ DE COMMANDE S'Y RAPPORTANT

(30) Priority: 09.09.2014 JP 2014183516
(43) Date of publication of application: 19.07.2017
(73) Proprietor: Mitsubishi Heavy Industries, Ltd., Tokyo 108-8215 (JP)
(72) Inventor: ITO, Takahide, Tokyo 108-8215 (JP); ENYA, Atsushi, Tokyo 108-8215 (JP); MATSUO, Minoru, Tokyo 108-8215 (JP); ITOU, Takehiko, Tokyo 108-8215 (JP)
(74) Representative: Cabinet Beau de Loménie
(86) International application number: PCT/JP2015/052150
(87) International publication number: WO 2016/038903

(56) References cited:
- WO-A1-2014/061799
- JP-A- 2005 315 522
- JP-A- 2009 118 172
- JP-A- 2013 092 298

## Description

### {Technical Field}

The present invention relates to a control device and system, and a method of controlling the same.

### {Background Art}

Conventionally, for example, a multi-type air conditioning system is known in which one outdoor device and a plurality of indoor devices are connected (see Japanese Unexamined Patent Application, Publication No. 2009-186144, for example). In such a multi-type air conditioning system, the outdoor device has an outdoor device controlling unit and each indoor device has an indoor device controlling unit for intercommunication between the outdoor device controlling unit and the indoor device controlling unit, so that the multi-type air conditioning system can be entirely controlled. On the other hand, Japanese Unexamined Patent Application, Publication No. 2005-315522 discloses an air conditioning system with a plurality of air conditioners, enabling a user to be able to cancel a prohibition of operation of the individual air conditioners with a remote controller when it is prohibited by a central apparatus.

### {Summary of Invention}

### {Technical Problem}

In such a conventional air conditioning system capable of performing air conditioning through intercommunication between each indoor device controlling unit and the outdoor device controlling unit, all the control programs used for system control need to operate with the same control version, i.e. interchangeability ensured between communication protocols or control command systems. Hence, if the indoor device or outdoor device constituting the air conditioning system is partly changed to an apparatus with novel control specs, the parts with original specs may operate but novel functional parts are difficult to use.

The applicant proposes development of a novel air conditioning system in which an outdoor device controlling unit and an indoor device controlling unit are separated from the outdoor device including the outdoor device controlling unit (local controlling unit) and an outdoor device control target apparatus (actuator) and an indoor device including the indoor device controlling unit (local controlling unit) and an indoor device control target apparatus (actuator), respectively, and these control functions are collected into one control device.

In this novel air conditioning system, a control device, which has collected functions of the outdoor device controlling unit and the indoor device controlling unit, sends control commands to control target apparatuses (actuators) of the outdoor device and the indoor device via a network. When the outdoor device and the indoor device are controlled via a network in this manner, the risk of troubles in control is low in a place where a stable communication quality is provided, and when the outdoor device and the indoor device are provided in a place where the communication environment is unstable, the communication quality decreases or interruption occurs, which may cause an uncontrollable state.

An object of the present invention is to provide a control device and a system, and a method of controlling the same which allow continuous stable control even when the communication environment and other installation environments change, for a system in which an apparatus is controlled via a communication line like in the novel air conditioning system described above.

### {Solution to Problem}

A first aspect of the present invention is a control device that is connected to an apparatus including a local controlling unit (e.g., all or part of the function of the local controlling unit) via a communication line and that can control the apparatus via the communication line, the control device including: a control ratio changing means that changes a control ratio between the local controlling unit and the control device (e.g., a ratio between control of the corresponding actuator executed by the local controlling unit and control of the actuator executed by the control device), and a communication quality monitoring means that monitors a communication quality with respect to the apparatus, the control ratio changing means including: a storage means that contains a plurality of control modes with different control ratios, the control modes being associated with communication quality information, a mode selecting means that selects one control mode from the plurality of control modes in accordance with predetermined conditions, referring to information stored in the storage means and selecting a control mode corresponding to the current communication quality information, and a mode notifying means that notifies the apparatus of the control mode selected by the mode selecting means.

This control device can change the control ratio between the local controlling unit and the control device in accordance with installation environments and the like. Thus, stable control can be achieved.

In this control device, the communication quality monitoring means monitors the communication quality with respect to the apparatus, and a control mode corresponding to this communication quality is selected by the mode selecting means. Accordingly, when apparatus control is executed via the communication line, the control by the control device can be reduced upon a reduction in communication quality, for example. Hence, even if a reduction in communication quality or interruption occurs, the local controlling unit performs apparatus control, so that apparatus control can be continued, for example.

In this control device, if the control mode selected by the mode selecting means is different from the previously selected control mode, the previous control mode may be continued for a predetermined period of time and a request for a reduction in transmission data volume may be sent to the apparatus.

Since a request for a reduction in transmission data volume is sent to the apparatus before the control mode is switched, data required for control can be obtained even if the communication quality decreases to a certain level. Accordingly, if the communication quality fluctuates in a short cycle, the control mode can be prevented from frequently switching, for example. Further, even if the communication quality temporarily decreases, reducing the transmission data volume allows data required for control to be obtained.

In this control device, if the communication quality is at or above a predetermined threshold, the latest control program may be sent to the apparatus.

When the communication quality is excellent, the latest control program is sent to the apparatus, so that the control programs in the local controlling unit of the apparatus can be readily updated.

In this control device, the mode selecting means may hold scheduling information associated with time and a control mode and a control mode may be selected according to the scheduling information.

In this control device, the mode selecting means selects a mode in accordance with schedule information associated with time and a control mode.

In this control device, a control mode is selected based on information from the local controlling unit.

In this control device, the control mode may include a full remote control mode in which the control device performs control, a full local control mode in which only the local controlling unit performs control, and at least one of a protection control mode in which only protection control is performed by the local controlling unit, a target value instruction control mode in which a control target value is given to the apparatus and control based on the control target value is performed by the local controlling unit, and a remote monitoring mode in which the state value of the apparatus is monitored.

Since a plurality of control modes for different stages of control ratios are prepared, control by the control device can be performed on a priority basis as much as possible and a control mode suitable for the communication quality can be selected.

A second aspect of the present invention is a system including: the above-described control device; and an apparatus that is connected to the above-described control device via a communication line, the apparatus including: a storage means that contains a plurality of control modes; and a local controlling unit that executes, upon reception of information on a control mode from the control device, control in the received control mode.

In this system, a plurality of apparatuses may be further included. When communication between any one of the apparatuses and the control device is interrupted and communication between any other one of the apparatuses and the control device is established, control information for the one of the apparatuses may be sent to the one of the apparatuses via the other one of the apparatuses.

In this system, even if interruption of communication between the control device and any of the apparatuses occurs, control information from the control device can be sent via the other one of the apparatuses still in communication with the control device. Accordingly, even if the communication quality decreases, control by the control device can be achieved.

In this system, the plurality of apparatuses are a plurality of indoor devices, a plurality of outdoor devices, or an outdoor device and an indoor device, for example. Moreover, In this system, for current data that is contained in a packet travelling between the apparatus and the control device and is the same as data sent in the previous transmission period, not the current data but information indicating that the current data is the same as the data in the previous transmission period may be stored in the packet. This can effectively reduce data volume.

A third aspect of the present invention is a method of controlling a system including an apparatus with a local controlling unit and a control device that can control the apparatus via a communication line. Cooperation between the local controlling unit and the control device can execute control of the apparatus, and a control ratio between the controlling unit and the control device is dynamically changed according to the communication quality with respect to the apparatus.

### {Advantageous Effect of Invention}

The present invention provides an advantage of a reduction in influence on control for an impaired communication quality or interruption.

### {Brief Description of Drawings}

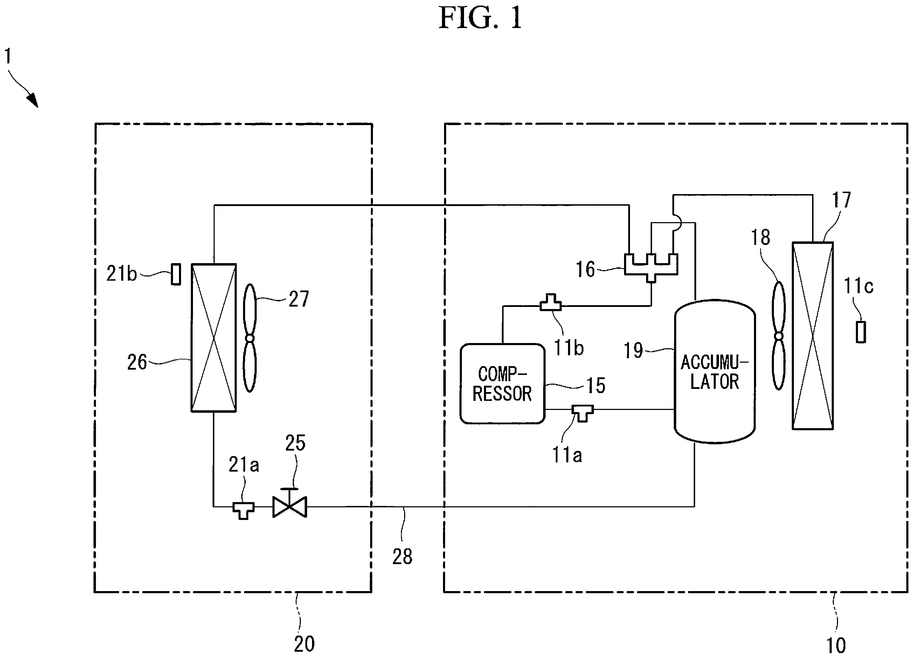

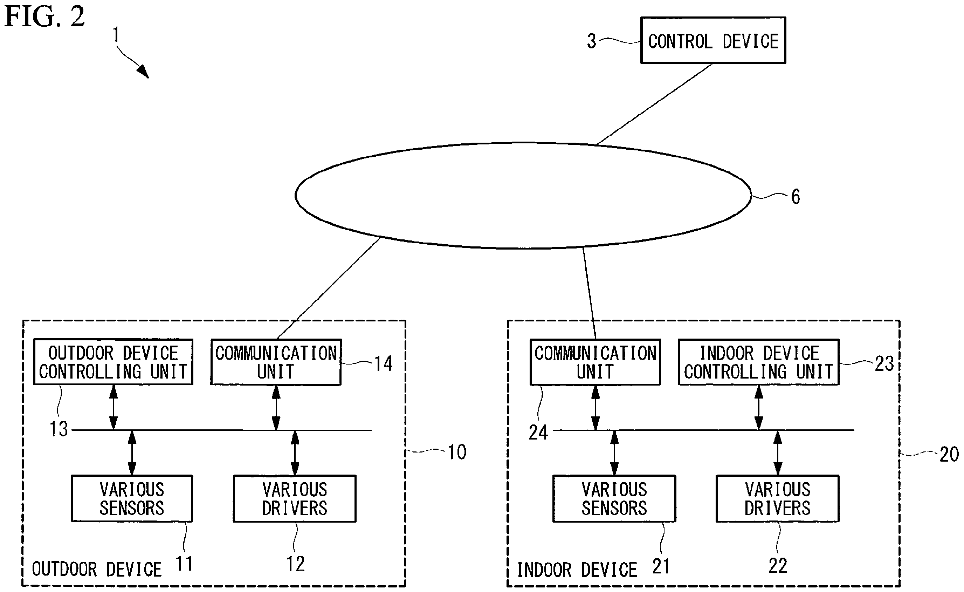

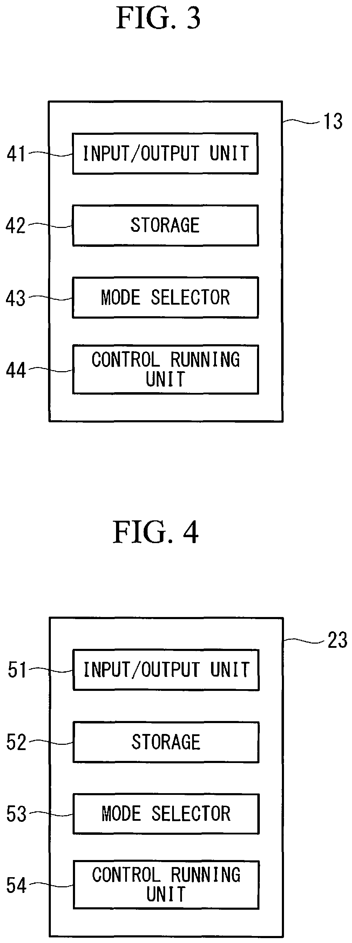

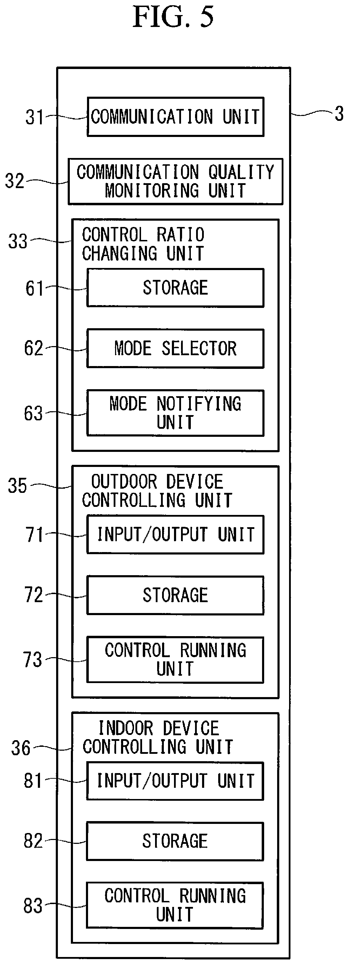

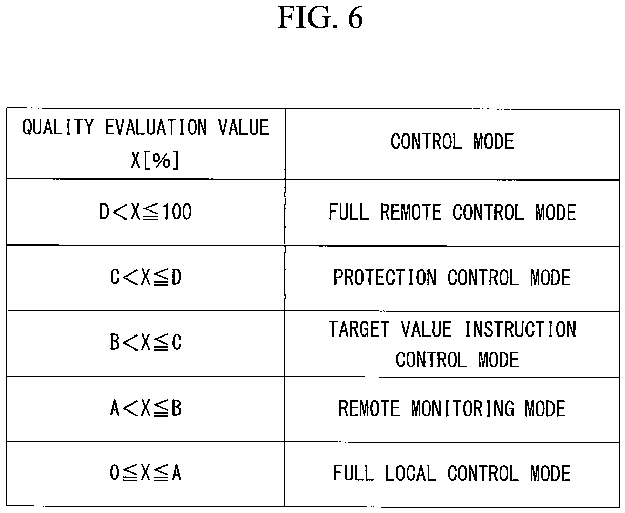

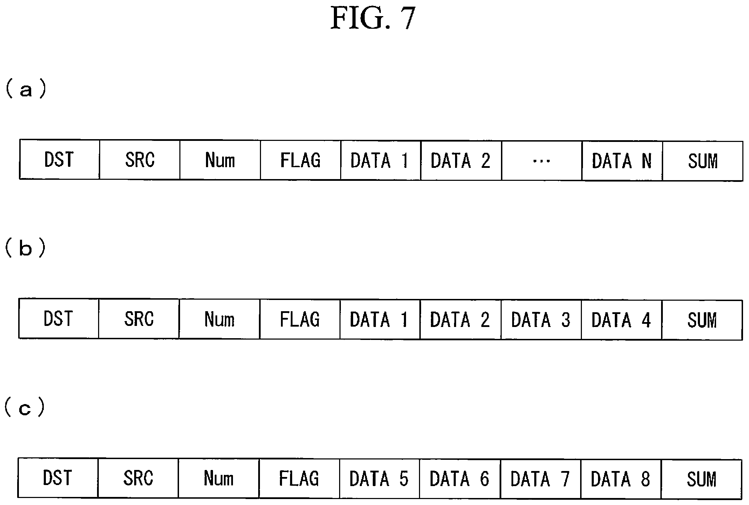

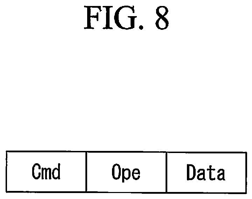

{Fig. 1} Fig. 1 illustrates a refrigerant system in an air conditioning system according to one embodiment of the present invention.
{Fig. 2} Fig. 2 illustrates an electrical configuration of the air conditioning system according to one embodiment of the present invention.
{Fig. 3} Fig. 3 is a functional block diagram of the outdoor device controlling unit shown in Fig. 2.
{Fig. 4} Fig. 4 is a functional block diagram of the indoor device controlling unit shown in Fig. 2.
{Fig. 5} Fig. 5 is a functional block diagram of a control device according to one embodiment of the present invention.
{Fig. 6} Fig. 6 illustrates an example of information stored in the storage shown in Fig. 5.
{Fig. 7} Fig. 7 illustrates an example of a packet structure used in the air conditioning system according to one embodiment of the present invention.
{Fig. 8} Fig. 8 illustrates an example of a packet structure used in the air conditioning system according to one embodiment of the present invention.

### {Description of Embodiment}

One embodiment of use of a control device and system, and a method of controlling the same of the present invention in an air conditioning system will now be described with reference to the drawings. Here, a control device and other devices of the present invention may be widely applied to any system other than the air conditioning system described below, which remotely controls an apparatus via a communication line. An example of the apparatus is a machine tool.

As shown in Fig. 2, an air conditioning system 1 according to one embodiment of the present invention includes, for example, an outdoor device 10, an indoor device 20, and a control device 3. The outdoor device 10 includes an outdoor device controlling unit (local controlling unit) 13 for locally controlling the outdoor device 10, while the indoor device 20 includes an indoor device controlling unit (local controlling unit) 23 for locally controlling the indoor device 20, respectively.

The outdoor device 10 and the indoor device 20 are connected to the control device 3 via a communication line 6 such that the control device 3 can remotely control them. That is, the control device 3 has the same functions as the outdoor device controlling unit 13 and the indoor device controlling unit 23, and can send control commands to the outdoor device 10 and the indoor device 20 via the communication line 6. In addition, the air conditioning system 1 according to this embodiment is mainly characterized in that it dynamically changes the control ratio between the control device 3, the outdoor device controlling unit 13, and the indoor device controlling unit 23, in accordance with the communication quality of the communication line 6.

The air conditioning system 1 according to this embodiment will now be described in detail.

Fig. 1 illustrates a refrigerant circuit in the air conditioning system 1 according to one embodiment of the present invention. As shown in Fig. 1, the air conditioning system 1 includes an outdoor device 10 and an indoor device 20 which is connected through a refrigerant pipe 28 shared with the outdoor device 10. Although Fig. 1 illustrates, for convenience, the case where one outdoor device 10 and one indoor device 20 constitute the air conditioning system 1, the number of outdoor devices 10 and indoor devices 20 constituting the air conditioning system 1 is not limited to this example.

As shown in Fig. 1, the outdoor device 10 includes, for example, a compressor 15 that compresses and ejects a refrigerant, a four-way valve 16 that changes the direction of the circulation of the refrigerant, an outdoor heat exchanger 17 that performs heat exchange between the refrigerant and outside air, an outdoor fan 18, and an accumulator 19 that is provided on the inlet pipe of the compressor 15 to separate liquid of the refrigerant. The outdoor device 10 includes various sensors 11 (see Fig. 2) such as a pressure sensor 11a for measuring low pressure, a pressure sensor 11b for measuring high pressure, and a temperature sensor 11c for measuring the temperature of the outdoor heat exchanger 17.

The indoor device 20 includes an electronic expansion valve 25, an indoor heat exchanger 26, and an indoor fan 27. The indoor device 20 includes various sensors 21 (see Fig. 2) such as a pressure sensor 21a for measuring the pressure across the expansion valve, and a temperature sensor 21b for measuring the temperature of the indoor heat exchanger 26.

Fig. 2 illustrates an electrical configuration of the air conditioning system 1 according to this embodiment. As shown in Fig. 2, intercommunication between the outdoor device 10 and the indoor device 20 can be provided via the communication line 6. The control device 3 can be connected to the communication line 6 to provide intercommunication between the outdoor device 10 and the indoor device 20 via the communication line 6. The communication line 6 is either wired or wireless.

Here, intercommunication between the outdoor device 10 and the indoor device 20 may be provided via any communication line other than the communication line 6.

The outdoor device 10 includes various sensors 11 including the pressure sensors 11a and 11b and the temperature sensor 11c, various drivers 12 for controlling various apparatus elements (e.g., the compressor 15 and the outdoor fan 18) constituting the outdoor device 10, an outdoor device controlling unit 13 for controlling various apparatus elements (e.g., the compressor 15) included in the outdoor device 10, and a communication unit 14 for communication via the communication line 6.

The indoor device 20 includes various sensors 21 including the pressure sensor 21a and the temperature sensor 21b, various drivers 22 for controlling various apparatus elements (e.g., the electronic expansion valve 25 and the indoor fan 27) constituting the indoor device 20, an indoor device controlling unit 23 for controlling various apparatus elements (e.g., the electronic expansion valve 25 and the indoor fan 27) included in the indoor device 20, and a communication unit 24 for communication via the communication line 6.

The outdoor device controlling unit 13 and the indoor device controlling unit 23 are computers including a processor, such as a CPU, a main memory, such as a RAM, and a rewritable memory, such as a hard disc. The processor expands various programs (e.g., programs for the control modes described later), which are written on hard discs and the like, in the main memory and processes them to achieve the functions of the parts described later.

Fig. 3 is a functional block diagram of the outdoor device controlling unit 13. As shown in Fig. 3, the outdoor device controlling unit 13 includes an input/output unit 41, a storage 42, a mode selector 43, and a control running unit 44. The storage 42 contains information for different control modes in order to control the outdoor device 10 in different control modes. The storage 42 contains, for example, information on the full remote control mode, the protection control mode, the target value instruction control mode, the remote monitoring mode, and the full local control mode.

In the full remote control mode, a control command from the control device 3 described later is received, and the received control command controls the apparatuses in the outdoor device (e.g., the compressor 15, the four-way valve 16, and the outdoor fan 18). In other words, in the full remote control mode, the controlling unit 13 does not perform computation for control.

In the protection control mode, the apparatuses in the outdoor device are controlled by a control command from the control device 3, but emergency stop control and protection control are performed by the outdoor device controlling unit 13. Emergency stop control refers to detecting irregularities, for example, if the low pressure is at or below a predetermined lower threshold or if the high pressure is at or above a predetermined upper threshold, and stopping the compressor 15. Protection control refers to decreasing the RPM of the compressor to prevent emergency stop control as much as possible if the tendency of an irregularity is detected. For example, if the low pressure is below a protection threshold which is set greater than the lower threshold or if the high pressure is at or above a protection threshold which is set lower than the upper threshold, the RPM of the compressor 15 is decreased.

In the target value instruction control mode, the control device 3 produces a control target value and the outdoor device controlling unit 13 performs computation of the control commands for the apparatuses on the basis of the produced control target value; thus, the outdoor device controlling unit 13 controls the apparatuses.

In the remote monitoring mode, the outdoor device controlling unit 13 controls the apparatuses, and when any irregularity or failure is detected, information on such irregularity detection or failure detection is sent to the control device 3. Accordingly, in the remote monitoring mode, only if any irregularity is detected, the outdoor device 10 sends a notice of an irregularity to the control device 3.

In the full local control mode, all control is performed by the outdoor device controlling unit 13. In other words, in the full local control mode, control is performed when intercommunication with the control device 3 via the communication line 6 is impossible.

As for the above-described control modes, the control load on the outdoor device controlling unit 13 increases in the full remote control mode, the protection control mode, the target value instruction control mode, the remote monitoring mode, and the full local control mode, in this order. In other words, the full remote control mode causes the lowest load on the outdoor device controlling unit 13 for processing, while the full local control mode causes the highest load on the outdoor device controlling unit 13 for processing.

The mode selector 43 selects a designated control mode when receiving information on the control mode from the control device 3. While the full remote control mode, the protection control mode, or the target value instruction control mode is selected, the mode selector 43 switches the mode to the full local control mode if no data is received from the control device 3 for a predetermined continuous period of time. Accordingly, when information sent via the communication line 6 is suddenly interrupted, for example, the mode can be readily switched to control by the outdoor device controlling unit 13, thereby allowing continuous control of the apparatus.

The control running unit 44 reads information on the control mode currently selected by the mode selector 43 from the storage 42 and executes it.

Fig. 4 is a functional block diagram of the indoor device controlling unit 23. As shown in Fig. 4, the indoor device controlling unit 23 includes the input/output unit 51, the storage 52, the mode selector 53, and the control running unit 54. The storage 52 contains information for different control modes in order to control the indoor device in different control modes. In other words, items to be processed executed by the indoor device controlling unit 23 in the full remote control mode, the protection control mode, the target value instruction control mode, the remote monitoring mode, and the full local control mode are stored in the storage 52.

Upon reception of information on the control mode from the control device 3, the mode selector 53 selects the designated control mode. While the full remote control mode, the protection control mode, or the target value instruction control mode is selected, the mode selector 53 switches the mode to the full local control mode if no data is received from the control device 3 for a predetermined continuous period of time. Accordingly, when information sent via the communication line 6 is suddenly interrupted, for example, the mode can be readily switched to control by the indoor device controlling unit 23, thereby allowing continuous control of the apparatus.

The control running unit 54 reads information on the control mode currently selected by the mode selector 53 from the storage 52 and executes it.

In all the above-described control modes, control of the angles of the louver and flap (wind direction control) and control of the RPM of the indoor fan (airflow control) may be always performed by the indoor device controlling unit 23. This is because these controls can be achieved by intercommunication between the remote controller and the indoor device controlling unit 23 and variations in these control values have almost no impact on the refrigerant pipe 28.

Like the outdoor device controlling unit 13 and the indoor device controlling unit 23, the control device 3 includes a computer including a processor, such as a CPU, a main memory, such as a RAM, and a rewritable memory, such as a hard disc. The processor expands various programs (e.g., programs for the control modes described later), which are written on hard discs and the like, in the main memory and processes them to achieve the functions of the parts described later.

Fig. 5 is a functional block diagram of the control device 3. As shown in Fig. 5, the control device 3 includes a communication unit 31, a communication quality monitoring unit 32, a control ratio changing unit 33, an outdoor device controlling unit 35, and an indoor device controlling unit 36.

The communication unit 31 provides intercommunication between the outdoor device 10 and the indoor device 20 via the communication line 6. The communication quality monitoring unit 32 monitors the communication quality of the communication line 6. For example, when data volume that should be usually received in a predetermined period of time (hereinafter referred to as "total data volume") is predetermined, the data volume received in the predetermined period of time is divided by the total data volume to determine the quality evaluation value, and this quality evaluation value is sent to the control ratio changing unit 33.

The control ratio changing unit 33 dynamically changes the control ratio between the control device 3 and the local controlling units: the outdoor device controlling unit 13 and the indoor device controlling unit 23, in accordance with the communication quality of the communication line 6. The control ratio changing unit 33 includes, for example, the storage 61, the mode selector 62, and the mode notifying unit 63.

As shown in Fig. 6, the storage 61 contains, for example, quality evaluation values (communication quality information) associated with the respective control modes.

The mode selector 62 selects a control mode corresponding to the current quality evaluation value on the basis of the quality evaluation values from the communication quality monitoring unit 32 and information stored in the storage 61.

The mode notifying unit 63 notifies the outdoor device 10 and the indoor device 20 of the selected control mode via the communication unit 31 and also notifies the outdoor device controlling unit 35 and the indoor device controlling unit 36 in the control device 3 of the selected control mode.

Information can be shared between the outdoor device controlling unit 35 and the indoor device controlling unit 36.

The outdoor device controlling unit 35 includes an input/output unit 71, a storage 72, and a control running unit 73.

The input/output unit 71 receives values measured by various sensors and information on the states of the apparatuses sent from the outdoor device 10. The storage 72 contains information for different control modes in order to control the outdoor device 10 in different control modes. In other words, items to be processed (e.g., programs and data) executed by the outdoor device controlling unit 35 in the control device 3 in the full remote control mode, the protection control mode, the target value instruction control mode, the remote monitoring mode, and the full local control mode are stored.

For example, the items to be processed in the full remote control mode are intended to be used such that the outdoor device controlling unit 35 of the control device 3 remotely controls the outdoor device 10. Here, the items to be processed in the full remote control mode are not necessarily the same as those of the outdoor device controlling unit 13 of the outdoor device 10 in the full local control mode.

For example, if distributed autonomous control is used in which the outdoor device controlling unit 35 and the indoor device controlling unit 36 of the control device 3 share information and operate independently of each other, control items used in distributed autonomous control are stored. Here, in distributed autonomous control, information is received from various sensors 11 and another controlling unit, i.e., the indoor device controlling unit 36, and a predetermined application inputs the information in accordance with control rules and sends a control command to the outdoor device 10.

The items to be processed in the protection control mode are the same as in the full remote control mode except that protection control is omitted. In the target value instruction control mode, processing related to computation of target values is performed but computation of control commands for the apparatuses based on protection control and target values is omitted. For example, in the target value instruction control mode, target values that contribute to energy saving are computed and sent to the outdoor device 10.

In the remote monitoring mode, control of the apparatuses is not performed and information on irregularities sent from the outdoor device 10 is received. In the full local control mode, no processing is performed.

The control running unit 73 reads information on the control mode, which is notified by the mode notifying unit 63, from the storage 72 and executes it.

Similarly, the indoor device controlling unit 36 includes an input/output unit 81, a storage 82, and a control running unit 83. The input/output unit 71 receives values measured by various sensors and information on the states of the apparatuses sent from the indoor device 20. The storage 82 contains information for different control modes in order to control the indoor device 20 in different control modes.

In other words, items to be processed executed by the indoor device controlling unit 36 in the control device 3 in the full remote control mode, the protection control mode, the target value instruction control mode, the remote monitoring mode, and the full local control mode are stored in the storage 82.

For example, the items to be processed in the full remote control mode are the same as the items to be processed in the full local control mode of the indoor device controlling unit 23 of the indoor device 20. The items to be processed in the protection control mode are the same as in the full remote control mode except that protection control is omitted. In the target value instruction control mode, processing related to computation of target values is performed but computation of control commands for the apparatuses based on protection control and target values is omitted. In the remote monitoring mode, control of the apparatuses is not performed and information on irregularities sent from the indoor device 20 is received. In the full local control mode, no processing is performed.

The control running unit 83 reads information on the control mode, which is notified by the mode notifying unit 63, from the storage 82 and executes it.

In the case where the angles of the flap and the louver and the RPM of the indoor fan are all controlled by the indoor device controlling unit 23 of the indoor device 20, that is, in the case where all processing is done by the indoor device 20, the controls by the control device 3 are omitted.

Here, the above-described control ratio changing unit 33, outdoor device controlling unit 35, indoor device controlling unit 36, and other units may be virtually mounted on one hardware. For example, upon startup, a program on the master boot record is run, a virtual CPU and virtual memory are allocated to each unit, and each unit is then virtually generated on one hardware.

The operation of the air conditioning system 1 having the above-described configuration will now be explained.

First, the outdoor device 10 and the indoor device 20 send measurement data and control information obtained by the various sensors 11 and 21 to the control device 3 via the communication line 6.

These data are received by the communication unit 31 of the control device 3, quality evaluation values are computed by the communication quality monitoring unit 32 on the basis of this received data volume, and the results are sent to the mode selector 62 of the control ratio changing unit 33.

The mode selector 62 selects a control mode corresponding to the current quality evaluation value on the basis of the information stored in the storage 61 and sends the selected control mode to the mode notifying unit 63. The mode notifying unit 63 notifies the outdoor device controlling unit 35 and the indoor device controlling unit 36 of the control mode selected by the mode selector 62.

In the outdoor device controlling unit 35, computation corresponding to the control mode notified by the mode notifying unit 63 is performed by the control running unit 73. Hence, for example, when the full remote control mode is selected, computation using sensor-measured values and the like fed to the input/output unit 71 is performed to produce control commands for the apparatuses in the outdoor device 10 (e.g., the compressor 15, the four-way valve 16, the outdoor heat exchanger 17, and the outdoor fan 18).

Similarly, in the indoor device controlling unit 36, computation corresponding to the control mode notified by the mode notifying unit 63 is performed by the control running unit 83. Hence, for example, when the full remote control mode is selected, computation using sensor-measured values and the like fed to the input/output unit 81 is performed to produce control commands for the apparatuses in the indoor device 20 (e.g., the electronic expansion valve 25 and the indoor fan 27).

Various control commands computed in this manner are sent to the outdoor device 10 and the indoor device 20 via the communication line 6. The outdoor device 10 and the indoor device 20 receiving these control commands at the various drivers 12 and 22 achieve control according to the control commands.

The above-described processing is repeated in a predetermined cycle, and an appropriate control mode is selected depending on the current communication quality. For example, cooperation between the control device 3, the outdoor device controlling unit 13, and the indoor device controlling unit 23 achieves control of the air conditioning system 1.

Consequently, for example, when the mode is switched from the full remote control mode to the protection control mode because the communication quality slightly decreases, cooperation between the outdoor device controlling unit 35 in the control device 3 and the outdoor device controlling unit 13 in the outdoor device 10 achieves control of the outdoor device 10, and, similarly in the indoor device 20, cooperation between the indoor device controlling unit 36 in the control device 3 and the indoor device controlling unit 23 in the indoor device 20 achieves control of the indoor device 20.

As explained above, with the air conditioning system and the method therefor and the control device according to this embodiment, the control ratio between the local controlling units: the outdoor device controlling unit 13 and the indoor device controlling unit 23, and the control device 3 is dynamically changed in accordance with the communication quality. Hence, for example, even if the communication quality decreases and information from the control device 3 is interrupted under control by the control device 3 via the communication line 6, switching to control by the local controlling unit allows the outdoor device 10 and the indoor device 20 to be continuously controlled. Since a plurality of control modes are prepared for different control ratios, the control ratio of the control device can be finely changed according to the communication quality.

Although this embodiment illustrates the case where the communication quality monitoring unit 32 evaluates the communication quality on the basis of the volume of data received in a predetermined time, this is not necessarily the case and the evaluation may be based on the communication rate, for example. For the full remote control mode, whether the control mode should be switched may be determined based on whether minimum data required for control has been received.

In the air conditioning system according to this embodiment, after the mode selector 62 selects the control mode according to the communication evaluation value, if the selected control mode may be different from the current control mode, the current communication mode is maintained for a predetermined period of time, which means that the control mode is not switched immediately and the data volume sent from the outdoor device 10 and the indoor device 20 to the control device 3 is reduced according to a reduction in communication quality.

A way of reducing data volume is to thin out slow-response data, that is, parameters which take a certain time to change in value, e.g., temperature data (outside temperature and room temperature (indoor suction temperature). That is, the transmission frequency for temperature data is reduced (e.g., 10 times of data transmission is changed to one time transmission) to reduce the total data volume.

Another way of reducing data volume is to add information to the packet structure of the same data as data sent in the previous transmission period such that the information indicates these data are equivalent, which may make the total packet data volume smaller.

Fig. 7 illustrates an example packet structure. Fig. 7(a) illustrates a packet structure according to this embodiment. In Fig. 7(a), DST is a destination address, SRC is a source address, and Num is a data count. FLAG is an equivalence data flag and a bit 1 is given if the data is the same as in the previous transmission period, while a bit 0 is given if the data is different. Data i refers to the i-th data, and SUM is a checksum.

Fig. 7(b) illustrates a specific packet structure based on Fig. 7(a) in which the data count is 4 and FLAG is "00000000 B(00 H)", and Fig. 7(c) illustrates a specific packet structure based on Fig. 7(a) in which the data count is 8 and FLAG is "00001111 B(0F H)". As shown in Fig. 7(c), data 1 to 4 are the same as in the previous period and FLAG of 1 bit indicates an equivalence to omit data transmission. Thus, data having the same value as in the previous period is denoted by bit number 1, so that the total data volume can be effectively reduced.

Data i in Fig. 7 may be changed as shown in Fig. 8. In Fig. 8, Cmd is a command code representing a data type (e.g., 01H indicates high pressure, and 02H indicates low pressure), Ope is an operation code representing the operation for data (e.g., 00H indicates display, and 01H indicates setting), and Data is the content of data. Data may be variable. For example, analog data may be 4 byte and digital data may be 1 byte.

This embodiment shows a configuration in which the control device 3 can remotely control the outdoor device 10 and the indoor device 20. Alternatively, only the outdoor device 10 may be remotely controllable, and the indoor device 20 may be controlled by the local indoor device controlling unit 23, for example.

When the air conditioning system 1 consists of a plurality of outdoor devices and a plurality of indoor devices, the plurality of outdoor devices may be remotely controlled by the control device 3 and all the indoor devices may be controlled by the local controlling unit.

In this embodiment, when the communication line 6 is interrupted, the full local control mode in which the local outdoor device controlling unit 13 and indoor device controlling unit 23 perform control is switched on. In this case, if another line that can communicate with the control device 3 is present, for example, if the outdoor device 10 cannot communicate with the control device 3 but the indoor device 20 can communicate with the control device 3, or if another air conditioning system is present near the outdoor device 10 and the indoor device 20 and any of the parts in the other air conditioning system can communicate with the control device 3, a device that can communicate with the control device 3 may be provided as a relay to indirectly establish intercommunication with the outdoor device 10 and the indoor device 20. This enables remote control by the control device 3 as much as possible.

In the air conditioning system according to this embodiment, when the communication quality is excellent, if the quality evaluation value is at or above a predetermined threshold, for example, the control device 3 may send the latest control program to the outdoor device 10 and the indoor device 20. Thus, when the communication quality is excellent, the latest control program is sent to the outdoor device 10 and the indoor device 20, so that the control programs in the outdoor device controlling unit 13 and the indoor device controlling unit 23 can be readily updated.

The present invention is not limited to the above embodiment and various modifications can be made without departing from the scope of the invention.

For example, the control ratio changing unit 33 dynamically changes the control ratio between the control device 3 and the local controlling units: the outdoor device controlling unit 13 and the indoor device controlling unit 23 according to the communication quality of the communication line 6 computed by the communication quality monitoring unit 32 in the above embodiment. Alternatively, if variations in the communication quality of the communication line 6 are periodic, for example, a control mode switching schedule depending on the communication quality may be prepared based on the previous data and the like, and the control ratio changing unit 33 may switch the control mode according to this schedule. In this case, the mode selector 62 holds scheduling information associated with time and the control mode, and the control mode may be switched according to this scheduling information, for example.

The control ratio changing unit 33 may dynamically change the control ratio according to information other than the communication quality. For example, the control ratio changing unit 33 may switch the control mode according to a command from the indoor device controlling unit 23 which is a local controlling unit. This enables an operation in a control mode suitable for the operation state and the like of the local controlling unit.

### {Reference Signs List}

- 1: air conditioning system
- 3: control device
- 6: communication line
- 10: outdoor device
- 13, 35: outdoor device controlling unit
- 20: indoor device
- 23, 36: indoor device controlling unit
- 31: communication unit
- 32: communication quality monitoring unit
- 33: control ratio changing unit
- 61: storage
- 62: mode selector
- 63: mode notifying unit

## Claims

1. A control device (3) that can be connected to an apparatus (10,20) including a local controlling unit (13,23) via a communication line and that can control the apparatus (10,20) via the communication line, the control device (3) comprising:
a control ratio changing means (33) for changing a control ratio between the local controlling unit (13,23) and the control device (3), the control ratio changing means (33) comprising:
a storage means (61) that contains a plurality of control modes with different control ratios,
a mode selecting means (62) for selecting one control mode from the plurality of control modes in accordance with predetermined conditions, and
a mode notifying means (63) for notifying the apparatus (10,20) of the control mode selected by the mode selecting means (62), the control device (3) being **characterized by** further comprising a communication quality monitoring means (32) for monitoring a communication quality with respect to the apparatus (10,20), wherein
the storage means (61) contains the control modes associated with communication quality information, and
the mode selecting means (62) is configured so as to refer to information stored in the storage means (61) and select a control mode corresponding to the current communication quality information.

2. The control device (3) according to Claim 1, configured so that if the control mode selected by the mode selecting means (62) is different from the previously selected control mode, the previous control mode is continued for a predetermined period of time and a request for a reduction in transmission data volume is sent to the apparatus (10,20).

3. The control device (3) according to Claim 1 or Claim 2, configured so that if the communication quality is at or above a predetermined threshold, the latest control program is sent to the apparatus (10,20).

4. The control device (3) according to Claim 1, wherein the mode selecting means (62) holds scheduling information associated with time and a control mode and is configured so that a control mode is selected according to the scheduling information.

5. The control device (3) according to any of Claims 1 to 4, wherein the control mode includes a full remote control mode in which the control device performs control, a full local control mode in which only the local controlling unit (13,23) performs control, and at least one of a protection control mode in which only protection control is performed by the local controlling unit (13,23), a target value instruction control mode in which a control target value is given to the apparatus (10,20) and control based on the control target value is performed by the local controlling unit (13,23), and a remote monitoring mode in which the state value of the apparatus (10,20) is monitored.

6. A system (1) comprising:
the control device (3) according to any of Claims 1 to 5; and
an apparatus (10,20) connected to the control device (3) via a communication line and comprising:
a storage means (42,52) that contains a plurality of control modes; and
a local controlling unit (13,23) for executing, upon reception of information on a control mode from the control device, control in the received control mode.

7. The system (1) according to Claim 6, comprising a plurality of apparatuses (10,20), each connected to the control device (3) via a communication line and comprising:
a storage means (42,52) that contains a plurality of control modes; and
a local controlling unit (13,23) for executing, upon reception of information on a control mode from the control device, control in the received control mode;
wherein the system (1) is configured so that:
when communication between any one of the apparatuses (10,20) and the control device (3) is interrupted and communication between any other one of the apparatuses (10,20) and the control device (3) is established, control information for the one of the apparatuses (10,20) is sent to the one of the apparatuses (10,20) via the other one of the apparatuses (10,20) .

8. The system (1) according to Claim 7, wherein the plurality of apparatuses (10,20) is a plurality of indoor devices (20), a plurality of outdoor devices (10), or an outdoor device (10) and an indoor device (20).

9. The system according to any one of Claims 6 to 8, configured so that, for current data that is contained in a packet travelling between the apparatus (10,20) and the control device (3) and is the same as data sent in the previous transmission period, not the current data but information indicating that the current data is the same as the data in the previous transmission period is stored in the packet.

10. A method of controlling a system (1) comprising an apparatus (10,20) with a local controlling unit (13,23) and a control device (3) that can control the apparatus (10,20) via a communication line, wherein
cooperation between the local controlling unit (13,23) and the control device (3) can execute control of the apparatus (10,20), and **characterized in that**
a control ratio between the local controlling unit (12,23) and the control device (3) is dynamically changed according to a communication quality with respect to the apparatus (10,20).

## Patentansprüche

1. Steuerungsvorrichtung (3), die über eine Kommunikationsleitung mit einem Gerät (10, 20) mit lokaler Steuerungseinheit (13, 23) verbunden werden kann und das Gerät (10, 20) über die Kommunikationsleitung steuern kann, wobei die Steuerungsvorrichtung (3) umfasst:
ein Steuerungsverhältnisänderungsmittel (33) zum Ändern eines Steuerungsverhältnisses zwischen der lokalen Steuerungseinheit (13, 23) und der Steuerungsvorrichtung (3), wobei das Steuerungsverhältnisänderungsmittel umfasst:
ein Speichermittel (61), das eine Vielzahl von Steuerungsmodi mit verschiedenen Steuerungsverhältnissen enthält,
ein Moduswählmittel (62) zum Wählen eines Steuerungsmodus aus der Vielzahl von Steuerungsmodi entsprechend vorgegebenen Bedingungen, und
ein Modusmeldemittel (63) zum Melden das Gerät (10, 20) des vom Moduswählmittel (62) ausgewählten Steuerungsmodus, wobei die Steuerungsvorrichtung (3) **dadurch gekennzeichnet ist, dass** sie ferner ein Kommunikationsqualitätsüberwachungsmittel (32) zum Überwachen der Kommunikationsqualität in Bezug auf das Gerät (10, 20) umfasst, wobei
das Speichermittel (61) die Steuerungsmodi enthält, die mit den Kommunikationsqualitätsinformationen in Zusammenhang stehen, und
das Moduswählmittel (62) so konfiguriert ist, dass es sich auf Informationen bezieht, die im Speichermittel (61) gespeichert sind, und einen Steuerungsmodus auswählt, der den aktuellen Kommunikationqualitätsinformationen entspricht.

2. Steuerungsvorrichtung (3) nach Anspruch 1, die so konfiguriert ist, dass der vorherige Steuerungsmodus über einen vorgegebenen Zeitraum fortgesetzt wird, wenn der vom Moduswählmittel (62) ausgewählte Steuerungsmodus von dem zuvor ausgewählten Steuerungsmodus verschieden ist, und eine Anfrage für eine Reduzierung des Sendedatenvolumens an das Gerät (10, 20) gesendet wird.

3. Steuerungsvorrichtung (3) nach Anspruch 1 oder Anspruch 2, die so konfiguriert ist, dass das letzte Steuerungsprogramm an das Gerät (10, 20) gesendet wird, wenn die Kommunikationsqualität an oder über einer vorgegebenen Schwelle liegt.

4. Steuerungsvorrichtung (3) nach Anspruch 1, wobei das Moduswählmittel (62) Zeitplaninformationen enthält, die mit einer Zeit und einem Steuerungsmodus verbunden sind, und so konfiguriert ist, dass ein Steuerungsmodus entsprechend den Zeitplaninformationen gewählt wird.

5. Steuerungsvorrichtung (3) nach einem der Ansprüche 1 bis 4, wobei der Steuerungsmodus einen vollen Fernsteuerungsmodus, in dem die Steuerungsvorrichtung die Steuerung durchführt, einen vollen Lokalsteuerungsmodus, in dem nur die lokal Steuerungseinheit (13, 23) die Steuerung durchführt, und mindestens einen von einem Schutzsteuerungsmodus, in dem nur eine Schutzsteuerung von der Lokalsteuerungseinheit (13, 23) durchgeführt wird, einem Sollwertanweisung-Steuerungsmodus, in dem dem Gerät (10, 20) ein Steuerungssollwert vorgegeben wird und die Steuerung auf der Grundlage des Steuerungssollwerts von der lokalen Steuerungseinheit (13, 23) durchgeführt wird, und einem Fernüberwachungsmodus, in dem der Zustandswert des Geräts (10, 20) überwacht wird, beinhaltet.

6. System (1), umfassend:
die Steuerungsvorrichtung (3) nach einem der Ansprüche 1 bis 5; und
ein Gerät (10, 20), das über eine Kommunikationsleitung mit der Steuerungsvorrichtung (3) verbunden ist und umfasst:
ein Speichermittel (42, 52), das eine Vielzahl von Steuerungsmodi enthält; und
eine lokale Steuerungseinheit (13, 23) zum Ausführen der Steuerung im empfangenen Steuerungsmodus nach Empfang der Informationen über einen Steuerungsmodus von der Steuerungsvorrichtung.

7. System (1) nach Anspruch 6, umfassend eine Vielzahl von Geräten (10, 20), die jeweils über eine Kommunikationsleitung mit der Steuerungsvorrichtung (3) verbunden sind und umfassen:
ein Speichermittel (42, 52), das eine Vielzahl von Steuerungsmodi enthält; und
eine lokale Steuerungseinheit (13, 23) zum Ausführen der Steuerung im empfangenen Steuerungsmodus nach Empfang der Informationen über einen Steuerungsmodus von der Steuerungsvorrichtung;
wobei das System (1) so konfiguriert ist, dass:
wenn die Kommunikation zwischen einem der Geräte (10, 20) und der Steuerungsvorrichtung (3) unterbrochen ist und die Kommunikation zwischen einem anderen der Geräte (10, 20) und der Steuerungsvorrichtung (3) hergestellt ist, werden Steuerungsinformationen für das eine der Geräte (10, 20) an das eine der Geräte (10, 20) über das andere der Geräte (10, 20) gesendet.

8. System (1) nach Anspruch 7, wobei die Vielzahl von Geräten (10, 20) eine Vielzahl von Innengeräten (20), eine Vielzahl von Außengeräten (10) oder ein Außengerät (10) und ein Innengerät (20) darstellt.

9. System nach einem der Ansprüche 6 bis 8, das so konfiguriert ist, dass für aktuelle Daten, die in einem Paket enthalten sind, das zwischen dem Gerät (10, 20) und der Steuerungsvorrichtung (3) unterwegs sind und dieselben wie die Daten sind, die im vorherigen Sendezeitraum gesendet wurden, nicht die aktuellen Daten, sondern die Informationen, die angeben, dass die aktuellen Daten dieselben sind wie die Daten im vorherigen Sendezeitraum, im Paket gespeichert sind.

10. Verfahren zur Steuerung eines Systems (1), umfassend ein Gerät (10, 20) mit einer lokalen Steuerungseinheit (13, 23) und einer Steuerungsvorrichtung (3), die das Gerät (10, 20) über eine Kommunikationsleitung steuern kann, wobei
die Zusammenarbeit zwischen der lokalen Steuerungseinheit (13, 23) und der Steuerungsvorrichtung (3) die Steuerung des Geräts (10, 20) ausführen kann, und **dadurch gekennzeichnet, dass**
ein Steuerungsverhältnis zwischen der lokalen Steuerungseinheit (12, 23) und der Steuerungsvorrichtung (3) entsprechend einer Kommunikationsqualität in Bezug auf das Gerät (10, 20) dynamisch geändert wird.

## Revendications

1. Dispositif de commande (3) qui peut être relié à un appareil (10, 20) comprenant une unité de commande locale (13, 23) via une ligne de communication et qui peut commander l'appareil (10, 20) via la ligne de communication, le dispositif de commande (3) comprenant :
un moyen de modification de rapport de commande (33) destiné à modifier un rapport de commande entre l'unité de commande locale (13, 23) et le dispositif de commande (3), le moyen de modification de rapport de commande (33) comprenant :
un moyen de stockage (61) qui contient une pluralité de modes de commande avec différents rapports de commande,
un moyen de sélection de mode (62) destiné à sélectionner un mode de commande parmi la pluralité de modes de commande selon des conditions prédéterminées, et
un moyen de notification de mode (63) destiné à notifier à l'appareil (10, 20) le mode de commande sélectionné par le moyen de sélection de mode (62), le dispositif de commande (3) étant **caractérisé en ce qu'**il comprend en outre un moyen de surveillance de qualité de communication (32) destiné à surveiller une qualité de communication par rapport à l'appareil (10, 20), dans lequel
le moyen de stockage (61) contient les modes de commande associés à des informations de qualité de communication, et
le moyen de sélection de mode (62) est configuré de façon à se reporter aux informations stockées dans le moyen de stockage (61) et à sélectionner un mode de commande correspondant aux informations de qualité de communication en cours.

2. Dispositif de commande (3) selon la revendication 1, configuré de sorte que, si le mode de commande sélectionné par le moyen de sélection de mode (62) est différent du mode de commande sélectionné précédemment, le mode de commande précédent soit poursuivi pendant une durée prédéterminée, et qu'une demande de réduction du volume de données de transmission soit envoyée à l'appareil (10, 20).

3. Dispositif de commande (3) selon la revendication 1 ou la revendication 2, configuré de sorte que, si la qualité de communication est égale ou supérieure à un seuil prédéterminé, le dernier programme de commande soit envoyé vers l'appareil (10, 20).

4. Dispositif de commande (3) selon la revendication 1, dans lequel le moyen de sélection de mode (62) conserve des informations de planification associées à la durée et à un mode de commande, et est configuré de sorte qu'un mode de commande soit sélectionné selon les informations de planification.

5. Dispositif de commande (3) selon l'une quelconque des revendications 1 à 4, dans lequel le mode de commande comprend un mode de commande à distance complet dans lequel le dispositif de commande exécute une commande, un mode de commande locale complet dans lequel seule l'unité de commande locale (13, 23) effectue une commande, et au moins l'un d'un mode de commande de protection dans lequel seule une commande de protection est exécutée par l'unité de commande locale (13, 23), d'un mode de commande d'instruction de valeur cible dans lequel une valeur cible de commande est fournie à l'appareil (10, 20), et d'une commande qui repose sur la valeur cible de commande est exécuté(e) par l'unité de commande locale (13, 23), et un mode de surveillance à distance dans lequel la valeur d'état de l'appareil (10, 20) est surveillée.

6. Système (1) comprenant :
le dispositif de commande (3) selon l'une quelconque des revendications 1 à 5 ;
et
un appareil (10, 20) relié au dispositif de commande (3) via une ligne de communication et comprenant :
un moyen de stockage (42, 52) qui contient une pluralité de modes de commande ; et
une unité de commande locale (13, 23) destinée à exécuter, lors de la réception d'informations sur un mode de commande de la part du dispositif de commande, une commande dans le mode de commande reçu.

7. Système (1) selon la revendication 6, comprenant une pluralité d'appareils (10, 20), chacun reliés au dispositif de commande (3) via une ligne de communication et comprenant :
un moyen de stockage (42, 52) qui contient une pluralité de modes de commande ; et
une unité de commande locale (13, 23) destinée à exécuter, lors de la réception d'informations sur un mode de commande de la part du dispositif de commande, une commande dans le mode de commande reçu ;
dans lequel le système (1) est configuré de sorte que :
lorsque la communication entre un quelconque des appareils (10, 20) et le dispositif de commande (3) est interrompue et la communication entre un quelconque autre des appareils (10, 20) et le dispositif de commande (3) est établie, des informations de commande pour l'un des appareils (10, 20) soient envoyées à l'un des appareils (10, 20) via l'autre des appareils (10, 20).

8. Système (1) selon la revendication 7, dans lequel la pluralité d'appareils (10, 20) est une pluralité de dispositifs d'intérieur (20), une pluralité de dispositifs d'extérieur (10), ou un dispositif d'extérieur (10) et un dispositif d'intérieur (20).

9. Système selon l'une quelconque des revendications 6 à 8, configuré de sorte que, pour les données actuelles qui sont contenues dans un paquet qui se déplace entre l'appareil (10, 20) et le dispositif de commande (3) et qui sont identiques aux données envoyées pendant la période de transmission précédente, non pas les données actuelles mais des informations indiquant que les données actuelles sont identiques aux données de la période de transmission précédente soient stockées dans le paquet.

10. Procédé de commande d'un système (1) comprenant un appareil (10, 20) avec une unité de commande locale (13, 23) et un dispositif de commande (3) qui peut commander l'appareil (10, 20) via une ligne de communication, dans lequel
une coopération entre l'unité de commande locale (13, 23) et le dispositif de commande (3) peut exécuter la commande de l'appareil (10, 20), et **caractérisé en ce que**
un rapport de commande entre l'unité de commande locale (12, 23) et le dispositif de commande (3) est modifié dynamiquement selon une qualité de communication par rapport à l'appareil (10, 20).
